(19) Europäisches Patentamt
European Patent Office
Office européen des brevets

(11) **EP 2 572 229 B1**

(12) **FASCICULE DE BREVET EUROPEEN**

(45) Date de publication et mention
de la délivrance du brevet:
**28.02.2018 Bulletin 2018/09**

(21) Numéro de dépôt: **11718405.1**

(22) Date de dépôt: **10.05.2011**

(51) Int Cl.:
*G02B 27/01* (2006.01)     *G02B 5/18* (2006.01)
*G09G 5/00* (2006.01)     *G02B 3/00* (2006.01)
*G02B 5/30* (2006.01)

(86) Numéro de dépôt international:
**PCT/EP2011/057472**

(87) Numéro de publication internationale:
**WO 2011/144487 (24.11.2011 Gazette 2011/47)**

(54) **SYSTEME D'AFFICHAGE TETE HAUTE**

HEAD UP ANZEIGEVORRICHTUNG

HEAD UP DISPLAY DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.05.2010 FR 1053935**

(43) Date de publication de la demande:
**27.03.2013 Bulletin 2013/13**

(73) Titulaires:
• **Delphi Technologies, Inc.
Troy, MI 48007 (US)**
• **Université de Strasbourg
67081 Strasbourg Cedex (FR)**

(72) Inventeurs:
• **MOUSSA, Hassan
F-67400 Illkirch (FR)**
• **EL HAFIDI, Idriss
F-67400 Illkirch-Graffenstaden (FR)**

(74) Mandataire: **Robert, Vincent et al
Delphi France SAS
Bâtiment Le Raspail - Paris Nord 2
22, avenue des Nations
CS 65059 Villepinte
95972 Roissy CDG Cedex (FR)**

(56) Documents cités:
**EP-A1- 0 710 866        EP-A2- 0 312 094
EP-A2- 0 398 346        FR-A1- 2 208 105
FR-A1- 2 722 582        US-A- 4 261 635
US-A1- 2008 225 391**

• **ANONYMOUS: "Image source for an analog head up display", RESEARCH DISCLOSURE, MASON PUBLICATIONS, HAMPSHIRE, GB, vol. 322, no. 21, 1 février 1991 (1991-02-01), XP007116029, ISSN: 0374-4353**

EP 2 572 229 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

DOMAINE TECHNIQUE

La présente invention relève du domaine des systèmes d'affichage tête haute pour véhicules automobiles, destinés à l'affichage d'images virtuelles dans le champ de vision du conducteur. Ces systèmes permettent la visualisation de paramètres de fonctionnement du véhicule obtenus à partir d'une image objet rétro-éclairée sur l'afficheur d'un projecteur placé dans l'habitacle du véhicule.

ARRIERE-PLAN TECHNOLOGIQUE DE L'INVENTION

La plupart des systèmes d'affichage tête haute existants sont implantés dès l'origine dans les véhicules, c'est-à-dire qu'ils sont montés et réglés au moment de la construction de ceux-ci. Les véhicules sont dans ce cas conçus pour que cette implantation soit effectuée dans les meilleures conditions notamment de localisation par rapport au champ de vision du conducteur. Les réglages, parfois compliqués, sont effectués dès l'origine, lors de la construction du véhicule.

Des configurations à installer a posteriori à titre d'équipement indépendant implantable le cas échéant par l'utilisateur existent également, mais elles sont dans la plupart des cas très délicates à régler, et/ou pas facilement intégrables aux véhicules notamment parce que les endroits dans lesquels elles peuvent être implantées sont très limités.

L'une des raisons principales à ces difficultés tient au fait que ces systèmes comportent un composant optique qui est placé dans le champ de vision de l'utilisateur, composant qui assure des fonctions optiques dont le positionnement correct de l'image virtuelle dans ce même champ de vision, fonctions dont la mise en oeuvre avec les technologies utilisées jusqu'ici conduit à conférer au composant une transparence insuffisante au regard des normes de sécurité en vigueur.

Un tel système a vocation à apporter une fonctionnalité supplémentaire pour améliorer l'utilisation du véhicule, mais ne doit pas retrancher dans le même temps un élément de confort, au surplus au détriment de la sécurité de conduite.

En général, dans les systèmes existants, le composant placé dans le champ de vision gère la profondeur de projection, paramètre sensible puisque lié à l'intégration de paramètres de conduite du véhicule dans l'environnement objet de l'attention visuelle du conducteur. Ladite profondeur est en général considérée comme devant être adaptée aux dimensions du véhicule et à la scène réelle (sa valeur est généralement supérieure à 1,80 m).

De même, il convient que l'image virtuelle projetée dans le champ de vision du conducteur ait une taille et une luminance suffisantes, un compromis devant toutefois être trouvé pour éviter de perturber l'attention du conducteur sur ce qui se passe autour du véhicule tout en affichant clairement les informations utiles au pilotage. Enfin, le positionnement de l'image virtuelle doit être maîtrisable dans un plan vertical. L'ensemble de ces paramètres doit rendre la lecture de l'image virtuelle confortable à la fois par rapport à l'environnement réel et par rapport à la forme du véhicule.

Les systèmes d'affichage tête haute disponibles actuellement sur le marché de l'équipement présentent à cet égard un certain nombre de limitations principalement dues à leur technologie. Ainsi, qu'ils soient basés sur des hologrammes par exemple réalisés à partir de matériaux photosensibles ou sur des miroirs semi-réfléchissants, ce qui est le cas pour la plupart des solutions actuellement disponibles, les niveaux de transparence obtenus sont faibles et se traduisent concrètement par une dégradation du champ de vision du conducteur.

Ce niveau de transparence est en particulier bien inférieur aux valeurs minimales exigées par les réglementations liées aux pare-brise.

Secondairement, le niveau de luminance qui est obtenu par l'intermédiaire de ces solutions est limité, également du fait de la transparence insuffisante qui dégrade en pratique la lisibilité de l'image virtuelle.

La publication EP 0 710 866 A1 décrit une optique indépendante, pour système d'affichage tête-haute pour véhicule automobile, d'un intérêt particulier.

RESUME DE L'INVENTION

La présente invention remédie à ces inconvénients, en proposant une unité optique conçue pour gérer optimalement les paramètres nécessaires à la mise en oeuvre de l'affichage tête haute, de surcroît aisément réglable sans compétences particulières. Le système proposé est enfin facile à fabriquer, et industrialisable en grandes séries à des coûts adaptés à ce type de marché. L'implantation ultérieure dans des véhicules automobiles, le cas échéant par le conducteur lui-même, est facilitée par la compacité de l'unité optique, qui est prévue pour s'adapter à tous les types de systèmes de projection obéissant aux standards en vigueur.

Cette unité optique indépendante, destinée à l'affichage dans le champ de vision du conducteur d'une image virtuelle obtenue à partir d'une image objet provenant d'un projecteur, comporte un premier composant optique réfléchissant les rayons lumineux incidents issus du projecteur en direction d'un second composant optique placé dans le champ de vision du conducteur en vue du positionnement d'une image virtuelle finale. Des moyens de réglage de leur position relative sont prévus dans l'unité de l'invention.

Celle-ci se caractérise à titre principal en ce que le premier composant réalise un agrandissement de l'image objet et augmente sa profondeur de champ et le second composant positionne l'image virtuelle dans un plan vertical, ledit second composant étant réalisé en matériau transparent de forme d'allure lenticulaire dont l'une des faces est plane et comporte un réseau diffractif de positionnement de l'image virtuelle finale, ladite forme et le réseau diffractif étant prévus pour ne pas déformer la scène extérieure visible par le conducteur à travers le second composant.

Plus précisément, ledit second composant est réalisé en matériau transparent de forme d'allure lenticulaire dont la face côté conducteur est plane et comporte un réseau diffractif de positionnement de l'image virtuelle finale comprenant au moins un ensemble de traits rectilignes parallèles et équidistants d'un pas p compris entre 0,4 μm et 1 μm, le rapport de largeur du trait et du pas étant compris entre 0,3 et 0,6, de manière à permettre le positionnement de l'image virtuelle dans un plan vertical sans produire pour le conducteur une déformation de la scène extérieure visible à travers le second composant.

Ce ou ces réseau(x) diffractifs, avec les valeurs ci-dessus, permette(nt) de ne pas diminuer le niveau de transparence du second composant, prévu à l'origine dans un matériau très transparent du type PMMA, PC ou PET.

Le second composant présente, sur sa face opposée au conducteur, une surface plane ou configurée avec une courbure prévue pour produire un agrandissement complémentaire de l'image objet, le rayon de courbure étant suffisamment grand pour ne pas déformer la scène extérieure visible par le conducteur à travers le second composant.

Pour éviter autant que possible l'altération de l'image extérieure, la convexité doit en pratique présenter un très grand rayon de courbure, ce qui signifie en d'autres termes que cette surface est très faiblement courbe. Cette courbure est prévue pour agrandir l'image d'un facteur g2.

En pratique, la face opposée au conducteur comporte une convexité présentant un rayon de courbure supérieur à 5m.

En d'autres termes, le composant qui est placé dans le champ de vision du conducteur ne produit aucune distorsion de la scène extérieure, mais exerce au contraire ses fonctions et contribue notamment au positionnement correct d'une image virtuelle de taille et de luminance suffisantes sans provoquer de perturbations optiques sur les rayons en provenance du dehors. Le positionnement de l'image virtuelle s'effectue à une certaine distance et dans un plan vertical situé dans le champ de vision du conducteur, et le second composant autorise un réglage en hauteur de cette image c'est-à-dire un déplacement dans ledit plan vertical.

Les fonctions principales d'agrandissement et d'augmentation de la profondeur de champ sont confiées au premier composant, qui n'apparaît pas dans le champ de vision du conducteur et peut par conséquent être sujet à des traitements optiques optimisant ces fonctions sans qu'une quelconque exigence de transparence soit requise.

Dans les systèmes de l'art antérieur, ces fonctions sont prises en charge par le composant situé dans le champ de vision du conducteur, d'où une altération notable de sa transparence, pourtant nécessaire et même règlementaire. C'est également le cas pour les systèmes utilisant la réflexion du pare-brise en tant que combineur pour l'affichage de l'image virtuelle, qui ont pour inconvénient une faible réflectivité nécessitant des sources d'éclairage puissantes et pour lesquels la projection de l'image virtuelle à une longue distance demande l'utilisation de plusieurs composants optiques dans le module de projection.

Le premier composant est en fait un réflecteur dont la face recevant les rayons lumineux incidents est concave. La concavité est par exemple définie par un rayon de courbure conférant un premier agrandissement à l'image objet du projecteur.

Cette concavité peut résulter d'une surface parabolique, sphérique, elliptique etc... La profondeur de champ qui résulte du premier composant est supérieure à la distance, nécessairement limitée, qui sépare le projecteur dudit premier composant.

La surface concave comporte des couches de réflexion sélective superposées présentant des indices de réfraction reflétant sélectivement la ou les longueurs d'ondes du faisceau de lumière à polarisation bien déterminée provenant du projecteur et issu d'au moins une source lumineuse émettant de la lumière, qui peut être une source laser monochromatique ou des diodes électroluminescentes (LED).

Alternativement, la surface concave peut ne comporter qu'une couche de réflexion.

Les couches à réflectivité sélective ont pour but de ne réfléchir que les rayons correspondant à l'image objet, et de « filtrer » de facto les rayons lumineux issus de l'environnement proche. La ou les couches sélectives sont en pratique superposées sur la surface concave, en nombre et épaisseurs adaptés à la ou aux couleurs des rayons lumineux incidents.

Un faisceau incident à large bande spectrale se propage en effet à travers les couches superposées, car la réflexion au niveau des différents dioptres s'effectue uniquement pour les faisceaux ayant une phase bien précise. Les faisceaux réfléchis ayant la même phase s'additionnent et se renforcent.

Le taux de réflexion est alors très élevé pour les longueurs d'onde de fonctionnement du système de visualisation tête haute, alors que pour la lumière environnante, c'est-à-dire ne provenant pas du projecteur, aucune réflexion structurée ne se produit.

Le second composant, positionnant l'image agrandie dans le champ de vision du conducteur, réalise de fait un agrandissement résiduel bien inférieur au taux d'agrandissement de l'image virtuelle primaire issue du premier composant. Ce n'est pas sa fonction principale, et elle doit surtout être réalisée sans porter atteinte à l'objectif principal de transparence et de restitution fidèle de l'image extérieure.

Sa courbure est par conséquent suffisamment faible pour ne pas distordre la réalité du panorama environnant le véhicule, en ce qu'il peut-être vu par le conducteur au travers de ce second composant optique.

Le réseau diffractif que comporte sa face plane peut être multiplexé, c'est-à-dire présenter plusieurs ensembles de traits rectilignes parallèles équidistants ayant des pas différents visant au positionnement d'images virtuelles de longueurs d'ondes différentes, correspondant par exemple aux couleurs primaires.

Pour améliorer les potentialités de l'affichage tête haute, il peut en effet être prévu l'affichage d'informations de différentes couleurs, en vue de positionner différents motifs colorés de l'image virtuelle finale en une zone précise avec une inclinaison donnée (correspondant à la hauteur dans le plan vertical).

Cette image est alors placée dans le champ de vision du conducteur à une profondeur supérieure à la profondeur de positionnement de l'image virtuelle intermédiaire obtenue via le premier composant, et son agrandissement est égal à la multiplication des deux facteurs d'agrandissement.

La fabrication d'un tel composant s'effectue sans difficulté, par exemple par moulage par injection, puisqu'il suffit alors de munir la face plane du moule d'une ligne rectiligne en relief par toute technique adéquate et de la dupliquer par translation à intervalles calculés. Un tel moule, dont la face opposée est dotée de la courbure désirée, permet de produire en grande série et à peu de frais le second composant optique.

Selon une variante, il est possible de prévoir un moule dont la face plane ne comporte aucune ligne, celles-ci étant obtenues ensuite de manière automatisée par tout procédé permettant un traçage correct des lignes sur la surface plane.

L'existence d'une solution d'orientation des faisceaux aussi simple qu'un réseau diffractif de traits rectilignes permet d'assurer l'objectif principal de l'invention, à savoir que les faisceaux lumineux provenant de l'environnement traversent le second composant sensiblement sans modifications. Il reste par conséquent transparent, garantissant que l'environnement du véhicule demeure parfaitement visible au conducteur.

Selon l'invention, des moyens de réglage de la position relative des deux composants permettent un pivotement du second composant par rapport au premier selon un axe perpendiculaire au plan contenant les axes optiques des composants.

En faisant varier l'angle entre les deux composants, on peut régler de manière plus fine la position verticale de l'image virtuelle finale, ce qui permet notamment de l'adapter à la position et à la taille du conducteur.

Par ailleurs, lesdits moyens de réglage peuvent permettre un déplacement translatif du second composant selon une direction parallèle à la normale passant par le sommet de la surface concave du premier composant.

Un tel déplacement permet de faire varier la distance de l'image virtuelle finale par rapport à l'unité optique, et par conséquent par rapport au conducteur, comme cela sera expliqué plus en détail dans la suite. Ce déplacement translatif du second composant peut être réalisé par des moyens d'entraînement motorisés ou manuellement.

Ces possibilités de réglage constituent un avantage majeur pour la fonctionnalité vision tête haute.

Parmi les autres avantages prépondérants de l'invention, il est à souligner que les deux composants peuvent être fabriqués très simplement en plastique, le second étant au surplus d'une seule pièce, c'est-à-dire comportant un unique substrat. Ils sont dès lors facilement industrialisables, du fait de la possibilité de leur réplication en masse.

Le second composant étant complètement transparent, il est parfaitement adapté à la vision tête haute, application dans laquelle le niveau de transparence requis est très élevé et réglementé. Du fait de la répartition propre à l'invention des fonctions entre les deux composants, sa forme et sa transparence ne sont plus obérées par les fonctions qu'il prend en charge.

Notamment, la face incurvée ne l'est que très légèrement puisque la fonction d'agrandissement relève principalement du premier composant optique. Celui-ci peut alors comporter au moins une couche réflective, l'opacification qui en résulte n'étant plus un problème. Dans une hypothèse à plusieurs couches, celles-ci sont de préférence sélectives, supprimant de ce fait la nécessité de tout cache mécanique de protection visant à minimiser la réflexion des rayons de lumière parasites (soleil et autres).

L'unité optique de l'invention peut comporter un support apte à être implanté sur ou au voisinage d'une planche de bord de véhicule, le premier et le second composants étant agencés sur le support, et les moyens de réglage permettant de modifier la position relative d'au moins un des deux composants par rapport au support.

L'invention concerne par ailleurs un système d'affichage tête haute qui comporte une unité optique telle que décrite ci-dessus et un dispositif de projection qui est agencé de sorte que les rayons lumineux de son afficheur soient émis à destination du premier composant.

Selon une première variante, l'utilisateur du véhicule peut acheter une unité optique selon l'invention et l'associer à un projecteur nomade classique par exemple fixé au plafond du véhicule, l'unité de l'invention étant implantée au niveau de la planche de bord.

Selon une seconde variante, le second composant s'étendant dans un plan globalement orthogonal à la direction de l'axe de vision du conducteur, à une extrémité du support située du côté du conducteur, le dispositif de projection est agencé sur le support, entre le premier et le second composants.

Dans cette hypothèse, l'unité optique de l'invention concentre la totalité des fonctions, et une simple implantation au niveau de la planche de bord suffit à obtenir un système d'affichage tête haute complet et fonctionnel.

De préférence, le dispositif de projection est alors agencé sous le second composant. Dans les deux cas, l'invention offre des possibilités de réglage faciles à mettre en oeuvre.

BREVE DESCRIPTION DES DESSINS

L'invention va à présent être décrite plus en détail, en référence aux figures annexées, fournies à titre non limitatif, pour lesquelles :

- la figure 1 montre schématiquement l'intégration d'une unité optique selon l'invention dans un véhicule muni d'un dispositif de projection disposé au niveau du plafond du véhicule ;
- la figure 2 représente le fonctionnement optique du premier composant ;
- la figure 3 illustre le fonctionnement optique du second composant ;
- la figure 4 montre une variante de l'unité optique de l'invention avec un dispositif de projection intégré à un support des deux composants ;
- la figure 5 représente, dans cette seconde version, la mise en oeuvre d'un réglage de position du second composant optique permettent de faire varier la distance de l'image virtuelle finale par rapport au conducteur ; et
- les figures 6 et 7 expliquent le fonctionnement optique du système permettant de faire varier la distance séparant l'image virtuelle du conducteur.

DESCRIPTION DES MODES DE REALISATION PREFERES

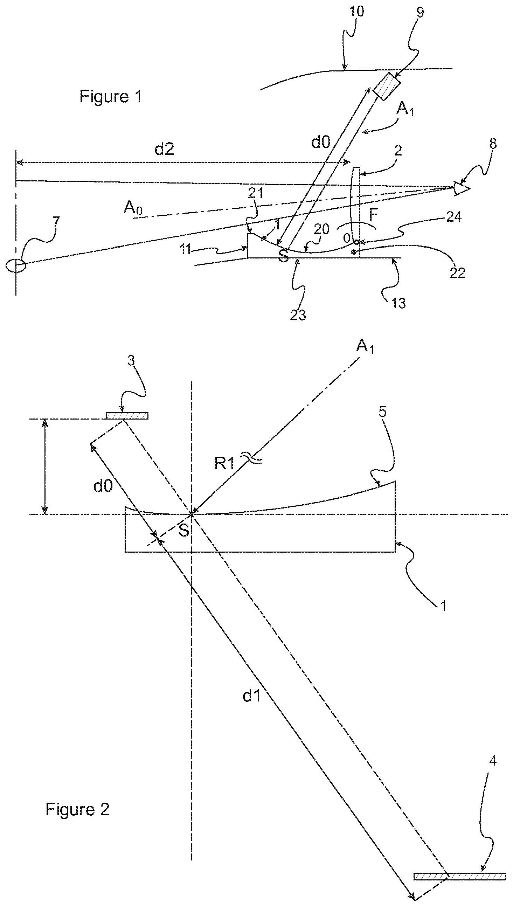

En référence à la figure 1, l'unité optique de l'invention, par exemple fixée sur une planche de bord (13) de véhicule, comporte deux composants (1, 2) qui ont pour fonction d'agrandir et de positionner dans le champ de vision du conducteur une image objet (3) en provenance d'un dispositif de projection classique (9) fixé dans ce cas au plafond (10) et affichant ladite image sur un afficheur de sortie par exemple rétro-éclairé par des faisceaux laser sensiblement monochromatiques ou par des LEDs.

Selon une possibilité, l'unité de l'invention est basée sur un support (11), qui est assimilé en figure 1 au premier composant (1), lequel est plus précisément intégré à un évidement (20) concave du support (11) comportant deux rebords (21) et (22) opposés. Le composant (1) confère à l'évidement (20) au moins en partie sa concavité. Le second composant (2) est monté sur le rebord (22). Pour des raisons de positionnement relatif du projecteur nomade (9), prenant notamment en considération la géométrie particulière d'un habitacle de véhicule et les distances qui y sont disponibles pour un système optique tel qu'un système d'affichage tête haute, le sommet S de la concavité du premier composant (1), à l'intersection de l'axe optique $A_1$ avec la surface correspondant à la géométrie du composant (1), est décalé vers le rebord (21) comme cela apparaît sur la figure 1, pour tenir compte de l'inclinaison des rayons optiques incidents.

Le support (11) comporte un fond d'allure plane (23) ou épousant la forme d'une planche de bord (13) de véhicule, lui permettant d'être facilement posé puis fixé sur une telle planche de bord (13) ou dans un logement prévu à cet effet dans ladite planche (13). Le positionnement du support (11) doit être tel que le second composant (2) croise l'axe optique ($A_o$) du regard du conducteur (8), sans dégrader visuellement la scène extérieure telle qu'elle apparaît audit conducteur (8).

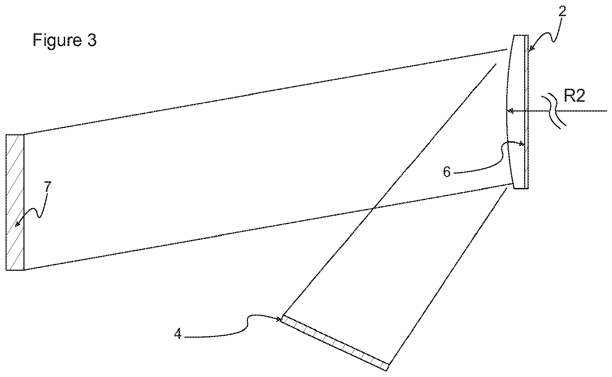

L'image virtuelle primaire ou intermédiaire (4) (voir en figure 2) agrandie par le premier composant (1), qui crée en outre une première profondeur de champ d1 supérieure à la distance d0 séparant le projecteur (9) du premier composant (1), est réfléchie à destination du second composant (2) (voir en figure 3), dont la fonction est de positionner une image virtuelle finale (7) correctement par rapport à un conducteur (8), c'est à dire d'une part à une seconde profondeur de champ d2 de préférence encore supérieure à d1, d'autre part avec un angle particulier vers le bas par rapport au conducteur (positionnement en hauteur dans un plan vertical).

Le premier composant (1), représenté isolé en figure 2, crée donc à partir de l'image objet (3) en sortie du projecteur (9) une image virtuelle primaire (4) à une distance d1 du sommet S du réflecteur concave de rayon R1. Le rayon de courbure de ce réflecteur (1) est calculé de façon à ce que la distance d1 soit supérieure à la distance d0 séparant l'image objet (3) dudit sommet. Il est par ailleurs également calculé de façon à ce que la distance d0 reste toujours dans les limites des distances disponibles dans l'habitacle du véhicule, et notamment de la distance entre le module du pavillon pouvant recevoir le projecteur et la partie gauche de la planche de bord en face du conducteur.

Ainsi, le calcul de la distance focale f, et donc du rayon R1, peut être obtenu à partir des distances d0 et d1. Pour un miroir concave, le choix de la focale f dépend en effet de la distance d0 entre le projecteur (9) et le miroir du premier composant (1) et de la distance d1 de l'image virtuelle primaire (4) souhaitée en utilisant la relation :

$$\frac{1}{f} = \frac{1}{d0} + \frac{1}{d1}$$

Le rayon de courbure R1 du miroir concave du premier composant (1) est lié à la distance focale par la relation :

$$f = R1/2$$

Il faut par ailleurs que le réflecteur, qui peut être sphérique, parabolique, elliptique ou autre... positionne l'image virtuelle primaire (4) du côté opposé de l'image objet (3), et que les rayons réfléchis soient dirigés vers le second composant (2), comme cela apparaît en figure 3. Une couche réfléchissante non sélective ou plusieurs couches réfléchissantes sélectives (5) sont disposées sur la surface du réflecteur.

Le composant (1) n'étant pas placé dans le champ de vision du conducteur, il peut être prévu opaque, selon les nécessités de fabrication et le matériau utilisé.

Le composant (2), tel qu'il est montré en figure 3, est un élément au contraire nécessairement transparent, muni d'une face plane et d'une face à grand rayon de courbure R2 (R2 >> R1).

La faible courbure permet d'obtenir un taux d'agrandissement supplémentaire g2 qui ne nuit pas à la restitution fidèle de l'environnement pour le conducteur (8). Au moins un réseau diffractif (6) de traits rectilignes séparés par un pas constant, ou un multiplexage de tels réseaux diffractifs (6) dans l'hypothèse de plusieurs couleurs à afficher, est réalisé sur la face plane du composant (2). Comme mentionné ci-dessus, ledit multiplexage permet d'interagir avec des rayons réfléchis sélectivement par le premier composant (1) dont les longueurs d'onde sont différentes, par exemple choisies centrées sur les couleurs rouge, verte et bleue.

Ce réseau diffractif (6) permet de positionner l'image virtuelle finale avec une inclinaison donnée par rapport au conducteur (8), c'est à dire de la faire varier dans un plan vertical en avant du pare-brise du véhicule, évidemment visible au dessus du capot.

L'image virtuelle finale (7) est alors placée dans le champ de vision du conducteur à une profondeur supérieure à celle de l'image virtuelle primaire, selon un agrandissement égal à g1 x g2, et elle ne gêne pas le conducteur dans sa vision globale du paysage environnant.

Il est à noter qu'en faisant varier l'angle du second composant (2) relativement au premier composant (1) à l'aide de moyens de réglage (24), par exemple par rotation autour d'un axe (O) comme indiqué schématiquement par la double flèche (F) arrondie de la figure 1, on peut régler le positionnement vertical de l'image virtuelle finale (7). Les moyens de réglage (24) participant à la fixation de l'un à l'autre des composants (1, 2) permettent ce pivotement.

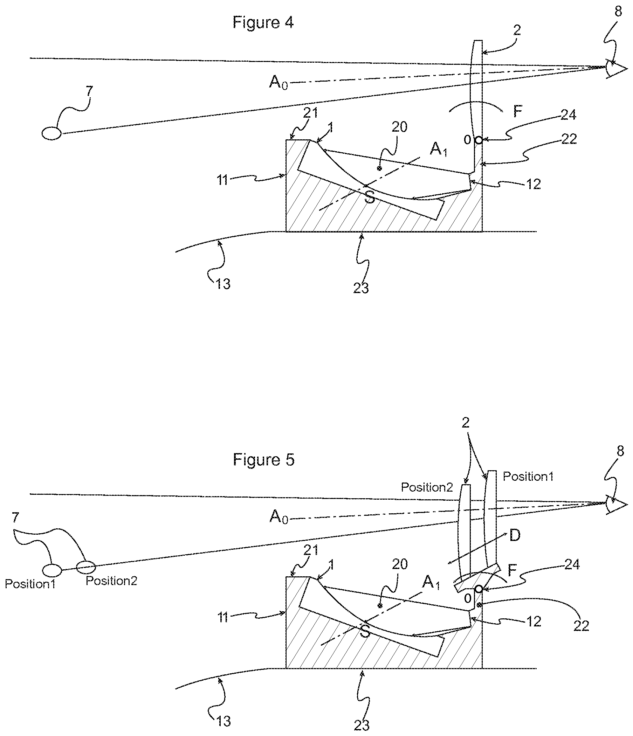

Le projecteur (12) peut alternativement (voir en figure 4) être intégré au support (11) dans lequel est fixé le premier composant (1), et auquel est relié le second composant (2). Dans ce cas, le projecteur (12) duquel provient le faisceau incident est situé à proximité immédiate du premier composant (1).

Le support (11) comporte un évidement (20) plus marqué que dans la configuration de la figure 1, permettant d'intégrer un projecteur (12) à la base du rebord (22) constitué en promontoire pour les moyens de réglage (24) de la position du second composant (2), de sorte que le projecteur (12) émette ses rayons optiques dans l'évidement (20), à destination d'un composant (1) sensiblement plus incliné vers et jusqu'au rebord (21), qui se trouve en fait en face desdits rayons.

Ce support (11) peut également être posé puis fixé sur une planche de bord (13), ou y être intégré dans un logement prévu à cet effet. Les moyens de réglages (24) sont alors tels que, outre un réglage en pivotement selon la flèche F et autour de l'axe (O), le second composant (2) peut également être ajustable, manuellement ou de manière motorisée, par déplacements translatifs (D) suivant une direction sensiblement parallèle à l'axe optique $A_1$ passant par le sommet S du réflecteur concave de rayon R1 constituant le premier composant (1). C'est ce qui est montré en figure 5.

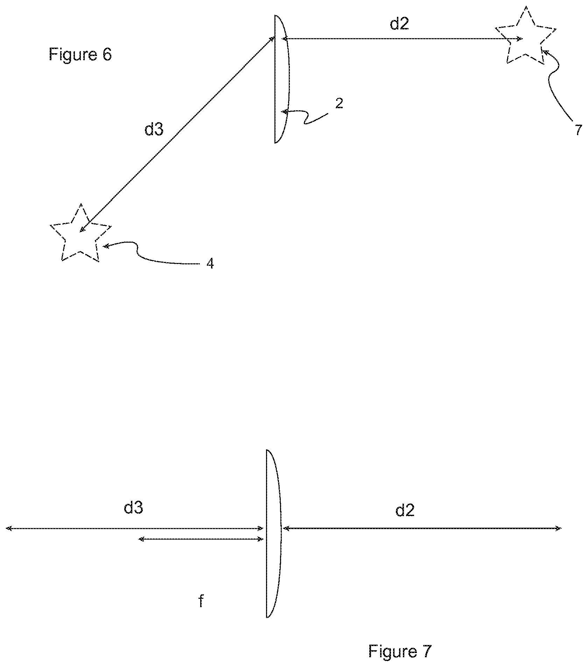

Deux positions distinctes du second composant (2) aboutissent alors à déplacer l'image virtuelle finale (7) en deux positions également distinctes. L'explication en est donnée en figures 6 et 7, qui modélisent optiquement le comportement global du système, en inversant cependant la position du composant (2) pour améliorer la lisibilité de la figure 7. La distance d3 sépare l'image virtuelle intermédiaire (4) obtenue via le premier composant optique (voir en figures 2 et 3) du second composant (2). Optiquement, les schémas des figures 6 et 7 sont équivalents, et on peut tirer de la figure 7 l'équation :

$$d2 = \frac{d3 \times f}{d3 - f}$$

Cette équation montre que rapprocher le composant (2) du composant (1) suivant l'axe D de la figure 5 conduit en fait à rapprocher l'image virtuelle finale (7) du conducteur (8), et les écarter aboutit à éloigner ladite image (7).

Les exemples illustrés à l'aide de figures ci-dessus ne doivent pas être considérés comme exhaustifs de l'invention, qui englobe les variantes de forme par exemple pour le support (11), son fond (23), l'évidement (20) ainsi que les rebords (21, 22).

**Revendications**

1. Unité optique indépendante pour système d'affichage tête haute pour véhicule automobile, destiné à l'affichage dans le champ de vision du conducteur (8) d'une image virtuelle (7) obtenue à partir d'une image objet (3) provenant d'un projecteur (9, 12), ladite unité comportant un premier composant optique (1) réfléchissant les rayons lumineux incidents issus du projecteur (9, 12) en direction d'un second composant optique (2) placé dans le champ de vision du conducteur (8) en vue du positionnement d'une image virtuelle finale (7), des moyens de réglage de leur position (24) relative étant prévus,

**caractérisée en ce que** le premier composant optique (1) réalise un agrandissement (g1) de l'image objet (3) et augmente sa profondeur de champ et le second composant optique (2) positionne l'image virtuelle (7) dans un plan vertical, ledit second composant optique (2) étant réalisé en matériau transparent de forme lenticulaire dont la face côté conducteur (8) est plane et la face opposée au conducteur comporte une convexité présentant un rayon de courbure supérieur à 5m, la face coté conducteur (8) comporte un réseau diffractif de positionnement de l'image virtuelle finale (7) comprenant au moins un ensemble de traits rectilignes parallèles et équidistants d'un pas p compris entre 0,4 $\mu$m et 1 $\mu$m, le rapport de largeur du trait et du pas étant compris entre 0,3 et 0,6, de manière à permettre le positionnement de l'image virtuelle (7) dans un plan vertical sans produire pour le conducteur (8) une déformation de la scène extérieure visible à travers le second composant optique (2), ladite forme lenticulaire et le réseau diffractif étant prévus pour ne pas déformer la scène extérieure visible par le conducteur (8) à travers le second composant optique (2).

2. Unité optique pour système d'affichage tête haute selon la revendication précédente, **caractérisée en ce que** le second composant optique (2) présente, sur sa face opposée au conducteur (8), une surface configurée avec une courbure prévue pour produire un agrandissement complémentaire (g2) de l'image objet, le rayon de courbure étant suffisamment grand pour ne pas déformer la scène extérieure visible par le conducteur (8) à travers le second composant optique (2).

3. Unité optique pour système d'affichage tête haute selon la revendication précédente **caractérisée en ce que** la face opposée au conducteur (8) comporte une convexité présentant un rayon de courbure supérieur à 5m.

4. Unité optique pour système d'affichage tête haute selon l'une des revendications précédentes, **caractérisée en ce que** le premier composant optique (1) est un réflecteur dont la surface recevant les rayons lumineux incidents provenant du projecteur (9, 12) est concave.

5. Unité optique pour système d'affichage tête haute selon la revendication précédente, **caractérisée en ce que** la surface concave comporte des couches de réflexion sélective superposées présentant des indices de réfraction reflétant sélectivement la ou les longueurs d'ondes du faisceau de lumière à polarisation bien déterminée provenant du projecteur (9, 12) et issu d'au moins une source lumineuse émettant de la lumière, qui peut être une source laser monochromatique ou des diodes électroluminescentes (LED).

6. Unité optique pour système d'affichage tête haute selon la revendication précédente, **caractérisée en ce que** la surface concave comporte une couche de réflexion.

7. Unité optique pour système d'affichage tête haute selon l'une quelconque des revendications précédentes, **caractérisée en ce que** des moyens de réglage (24) de la position relative des deux composants optiques (1, 2) permettent un pivotement (F) d'axe (O) du second composant optique (2) par rapport au premier (1) selon un axe perpendiculaire au plan contenant les axes optiques ($A_0$, $A_1$) des composants optiques (1, 2).

8. Unité optique pour système d'affichage tête haute selon l'une quelconque des revendications précédentes, **caractérisée en ce que** les moyens de réglage (24) de la position relative des deux composants optiques (1, 2) permettent un déplacement translatif (D) du second composant optique (2) selon une direction parallèle à l'axe optique ($A_1$) du premier composant optique (1).

9. Unité optique pour système d'affichage tête haute selon l'une quelconque des revendications précédentes, **caractérisée en ce qu'**elle comporte un support (11) apte à être implanté sur ou au voisinage d'une planche de bord (13) de véhicule, le premier et le second composants optiques (1, 2) étant agencés sur le support (11), et les moyens de réglage (24) permettant de modifier la position relative d'au moins un des deux composants optiques (1,2) par rapport au support (11).

10. Système d'affichage tête haute **caractérisé en ce qu'**il comporte une unité optique selon l'une quelconque des revendications précédentes et un dispositif de projection (9, 12) qui est agencé de sorte que les rayons lumineux de son afficheur soient émis à destination du premier composant optique (1).

11. Système d'affichage tête haute selon la revendication 10, **caractérisé en ce qu'**elle comporte une unité optique selon la revendication 9, **en ce que** le second composant optique (2) s'étend dans un plan globalement orthogonal à la direction de l'axe ($A_0$) de vision du conducteur (8), à une extrémité (22) du support (11) située du côté du conducteur (8), et **en ce que** le dispositif de projection (12) est agencé sur le support (11), entre le premier et le second composants optiques (1, 2).

12. Système d'affichage tête haute selon la revendication précédente, **caractérisé en ce que** le dispositif de projection (12) est agencé sous le second composant optique (2).

**Patentansprüche**

1. Unabhängige, optische Einheit für Head-Up-Anzeigeeinrichtung für Kraftfahrzeuge, die zum Anzeigen eines virtuellen Bildes (7) in dem Sichtfeld des Fahrers (8) bestimmt ist, welches Bild ausgehend von einem Objektbild (3) erhalten wird, das von einem Projektor (9, 12) stammt, wobei die Einheit eine erste optische Komponente (1) aufweist, die von dem Projektor (9, 12) stammende, einfallende Lichtstrahlen in Richtung einer zweiten optischen Komponente (2) reflektiert, die in dem Sichtfeld des Fahrers (8) angeordnet ist, zwecks Positionierung eines virtuellen, endgültigen Bildes (7), wobei Einrichtungen zum Einstellen ihrer relativen Position (24) vorgesehen sind,
   **dadurch gekennzeichnet, dass** die erste optische Komponente (1) eine Vergrößerung (g1) des Objektbildes (3) durchführt und dessen Tiefenschärfe erhöht, und die zweite optische Komponente (2) das virtuelle Bild (7) in eine vertikale Ebene positioniert, wobei die zweite optische Komponente (2) aus einem linsenförmigen, transparenten Material ausgebildet ist, dessen fahrerseitige Seite (8) flach ist und dessen dem Fahrer entgegengesetzte Seite konvex ausgebildet ist mit einem Krümmungsradius größer als 5 m, wobei die fahrerseitige Seite (8) ein Beugungsgitter zum Positionieren des virtuellen, endgültigen Bilds (7) aufweist, das zumindest ein Gefüge aus parallel verlaufenden geradlinigen Strichen aufweist, die abstandsgleich mit einer Teilung p zwischen 0,4 $\mu$m und 1 $\mu$m enthält, wobei das Verhältnis von Strichbreite und Teilung zwischen 0,3 und 0,6 beträgt, so dass die Positionierung des virtuellen Bildes (7) in einer senkrechten Ebene möglich ist, ohne für den Fahrer (8) eine Verformung der Außenszene durch die zweite optische Komponente (2) hindurch zu erzeugen, wobei die Linsenform und das Beugungsgitter dazu vorgesehen sind, um nicht die für den Fahrer (8) sichtbare Außenszene durch die zweite optische Komponente (2) hindurch zu verformen.

2. Optische Einheit für Head-Up-Anzeigeeinrichtung nach dem vorangehenden Anspruch, **dadurch gekennzeichnet, dass** die zweite optische Komponente (2) auf ihrer dem Fahrer (8) entgegengesetzten Seite eine Fläche aufweist, die mit einer Krümmung ausgebildet ist, die dazu vorgesehen ist, eine ergänzende Vergrößerung (g2) des Objektbildes zu erzeugen, wobei der Krümmungsradius groß genug ist, um nicht die für den Fahrer (8) sichtbare Außenszene durch die zweite optische Komponente (2) hindurch zu verformen.

3. Optische Einheit für Head-Up-Anzeigeeinrichtung nach dem vorangehenden Anspruch, **dadurch gekennzeichnet, dass** die dem Fahrer (8) entgegengesetzte Seite konvex ausgebildet ist und einen Krümmungsradius größer als 5 m aufweist.

4. Optische Einheit für Head-Up-Anzeigeeinrichtung nach einem der vorangehenden Ansprüche, **dadurch gekennzeichnet, dass** die erste optische Komponente (1) ein Reflektor ist, dessen Oberfläche, die die vom Strahler (9, 12) stammenden, einfallenden Lichtstrahlen aufnimmt, konkav ausgebildet ist.

5. Optische Einheit für Head-Up-Anzeigeeinrichtung nach dem vorangehenden Anspruch, **dadurch gekennzeichnet, dass** die konkav ausgeführte Fläche übereinanderliegende, selektiv reflektierende Schichten enthält, die Brechungsindizes aufweisen, die selektiv die Wellenlänge bzw. Wellenlängen des Lichtbündels mit ganz bestimmter Polarisierung reflektieren, das von dem Projektor (9, 12) stammt und von zumindest einer Licht emittierenden Lichtquelle ausgegeben wird, die eine monochromatische Laserquelle oder Leuchtdioden (LED) sein kann.

6. Optische Einheit für Head-Up-Anzeigeeinrichtung nach dem vorangehenden Anspruch, **dadurch gekennzeichnet, dass** die konkav ausgeführte Fläche eine reflektierende Schicht enthält.

7. Optische Einheit für Head-Up-Anzeigeeinrichtung nach einem der vorangehenden Ansprüche, **dadurch gekennzeichnet, dass** Einstelleinrichtungen (24) zum Einstellen der relativen Position der beiden optischen Komponenten (1, 2) eine Schwenkbewegung (F) der zweiten optischen Komponente (2) um die Achse (O) bezüglich der ersten optischen Komponente (1) entlang einer Achse senkrecht zur Ebene gestatten, welche die optischen Achsen ($A_0$, $A_1$) der optischen Komponenten (1, 2) enthält.

8. Optische Einheit für Head-Up-Anzeigeeinrichtung nach einem der vorangehenden Ansprüche, **dadurch gekennzeichnet, dass** die Einstelleinrichtungen (24) zum Einstellen der relativen Position der beiden optischen Komponenten (1, 2) eine translatorische Verlagerung (D) der zweiten optischen Komponente (2) entlang einer Richtung parallel zur optischen Achse ($A_1$) der ersten optischen Komponente (1,) gestatten.

9. Optische Einheit für Head-Up-Anzeigeeinrichtung nach einem der vorangehenden Ansprüche, **dadurch gekennzeichnet, dass** sie einen Träger (11) aufweist, der dazu geeignet ist, an bzw. in der Nähe von einem Armaturenbrett (13) des Fahrzeugs eingebaut zu werden, wobei die erste und die zweite optische Komponente (1, 2) an dem Träger (11) angeordnet sind, wobei die Einstelleinrichtungen (24) ermöglichen, die relative Position zumindest eines der beiden optischen Komponenten (1,2) bezüglich des Trägers (11) zu verändern.

10. Head-Up-Anzeigeeinrichtung, **dadurch gekennzeichnet, dass** sie eine optische Einheit nach einem der vorangehenden Ansprüche und eine Projektionsvorrichtung (9, 12) enthält, die so angeordnet ist, dass die Lichtstrahlen ihrer Anzeige mit Ziel auf die erste optische Komponente emittiert werden.

11. Head-Up-Anzeigeeinrichtung nach Anspruch 10, **dadurch gekennzeichnet, dass** sie eine optische Einheit nach Anspruch 9 enthält, dass die zweite optische Komponente (2) sich in einer Ebene orthogonal zur Sichtachse ($A_0$) des Fahrers an einem Ende (22) des Trägers (11) verläuft, das auf der Seite des Fahrers (8) liegt, und dass die Projektionsvorrichtung (12) an dem Träger (11) zwischen der ersten und der zweiten optischen Komponente (1, 2) angeordnet ist.

12. Head-Up-Anzeigeeinrichtung nach dem vorangehenden Anspruch, **dadurch gekennzeichnet, dass** die Projektionsvorrichtung (12) unter der zweiten optischen Komponente (2) angeordnet ist.

**Claims**

1. Independent optical unit for a head-up display system for a motor vehicle, said unit being intended to display, in the field of view of the driver (8) a virtual image (7) obtained from an object image (3) originating from a projector (9, 12), said unit including a first optical component (1) that reflects the incident light rays issued from the projector (9, 12) in the direction of a second optical component (2) that is placed in the field of view of the driver (8) with a view to positioning a final virtual image (7), means for adjusting their relative position (24) being provided, **characterized in that** the first optical component (1) produces a magnification (g1) of the object image (3) and increases its depth of field and the second optical component (2) positions the virtual image (7) in a vertical plane, said second optical component (2) being made of a transparent material of lenticular shape the driver-side face (8) of which is planar and the face of which opposite the driver includes a convexity having a radius of curvature smaller than 5 m, the driver-side face (8) includes a diffraction grating for positioning the final virtual image (7) comprising at least one set of parallel and equidistant rectilinear lines of pitch p comprised between 0.4 $\mu$m and 1 $\mu$m, the ratio of the width of lines to the pitch being comprised between 0.3 and 0.6, so as to allow the virtual image (7) to be positioned in a vertical plane without producing, for the driver (8), a deformation of the exterior scene visible through the second optical component (2), said lenticular shape and the diffraction grating being provided in order not to deform the exterior seen visible by the driver (8) through the second optical component (2).

2. Optical unit for a head-up display system according to the preceding claim, **characterized in that** the second optical component (2) has, on its face opposite the driver (8), an area configured with a curvature intended to produce a complementary magnification (g2) of the object image, the radius of curvature being sufficiently large not to deform the exterior scene visible by the driver (8) through the second optical component (2).

3. Optical unit for a head-up display system according to the preceding claim, **characterized in that** the face opposite the driver (8) includes a convexity having a radius of curvature larger than 5 m.

4. Optical unit for a head-up display system according to one of the preceding claims, **characterized in that** the first optical component (1) is a reflector the surface of which that receives the incident light rays originating from the projector (9, 12) is concave.

5. Optical unit for a head-up display system according to the preceding claim, **characterized in that** the concave surface includes superposed selectively reflecting layers having refractive indices that selectively reflect the one or more wavelengths of the light beam of well-determined polarisation originating from the projector (9, 12) and generated by at least one light-emitting light source, which may be a monochromatic laser source or light-emitting diodes (LEDs).

6. Optical unit for a head-up display system according to the preceding claim, **characterized in that** the concave surface includes a reflective layer.

7. Optical unit for a head-up display system according to any one of the preceding claims, **characterized in that** means (24) for adjusting the relative position of the two optical components (1, 2) allow the second optical component (2) to be pivoted (F) axially with respect to the first optical component (1) about an axis (O) perpendicular to the plane containing the optical axes ($A_0$, $A_1$) of the optical components (1, 2).

8. Optical unit for a head-up display system according to any one of the preceding claims, **characterized in that** the means (24) for adjusting the relative position of the two optical components (1, 2) allow a translational movement (D) of the second optical component (2) in a direction parallel to the optical axis ($A_1$) of the first optical component (1).

9. Optical unit for a head-up display system according to any one of the preceding claims, **characterized in that** it includes a holder (11) able to be installed on or in the vicinity of a vehicle dashboard (13), the first and second optical components (1, 2) being arranged on the holder (11), and the adjusting means (24) allowing the relative position of at least one of the two optical components (1, 2) to be modified with respect to the holder (11).

10. Head-up display system **characterized in that** it includes an optical unit according to any one of the preceding claims and a projecting device (9, 12) that is arranged so that the light rays emitted by its display are directed toward the first optical component (1).

11. Head-up display system according to Claim 10, **characterized in that** it includes an optical unit according to Claim 9, **in that** the second optical component (2) lies in a plane that is on the whole orthogonal to the direction of the viewing axis ($A_0$) of the driver (8), at an end (22) of the holder (11), which end is located on the side of the driver (8), and **in that** the projecting device (12) is arranged on the holder (11), between the first and second optical components (1, 2).

12. Head-up display system according to the preceding claim, **characterized in that** the projecting device (12) is arranged under the second optical component (2).

Figure 1

Figure 2

Figure 3

Figure 4

Figure 5

Figure 6

d2

d3

2

7

4

d3

f

d2

Figure 7

**EP 2 572 229 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0710866 A1